# EUROPÄISCHE PATENTSCHRIFT

(11) **EP 1 623 790 B1**
(45) Veröffentlichungstag und Bekanntmachung des Hinweises auf die Patenterteilung: **10.12.2008**
(21) Anmeldenummer: 04018663.7
(22) Anmeldetag: 06.08.2004
(51) Int. Cl.: B23K 26/12

(54) **Laserbearbeitungskopf**
Laser machining head
Tête d'usinage au laser

(43) Veröffentlichungstag der Anmeldung: 08.02.2006
(73) Patentinhaber: TRUMPF Werkzeugmaschinen GmbH + Co. KG, 71254 Ditzingen (DE)
(72) Erfinder: Lambert, Martin, 71404 Korb (DE); Weick, Jürgen-Michael, 71679 Asperg (DE)
(74) Vertreter: Kohler Schmid Möbus

(56) Entgegenhaltungen:
- EP-A- 0 896 851
- EP-A- 1 180 409

## Beschreibung

Die Erfindung betrifft einen Laserbearbeitungskopf, insbesondere Laserschneidkopf, mit einem der Strahlführung einer Laserbearbeitungsmaschine zugeordneten Gehäusebereich und mit einem der Laserbearbeitung zugeordneten Gehäusebereich, wobei eine Blende für den Laserstrahl als Trenneinrichtung zwischen den gehäusebereichen vorgesehen ist, siehe EP-A-1 180 409.

Bei allgemein bekannten, derzeit eingesetzten Linsen-Schneidoptiken von Laserbearbeitungsköpfen trennt die Linse die Strahlführung und die Prozessgaskammer voneinander. Bei Laserschneidmaschinen wird die Stahlführung mit reinem Gas gespült und dadurch vor Schmutzpartikeln aus der Umgebung (z.B. Schneidrauch) und unerwünschten gasförmigen Verunreinigungen geschützt. Der Schneidprozess wird durch Prozessgase (meist Sauerstoff oder Stickstoff) mechanisch und chemisch unterstützt. In der Prozessgaskammer herrscht während der Bearbeitung ein Druck von mehreren bar.

Bei CO₂-Laser-Schweißanlagen werden seit mehr als zwei Jahrzehnten Fokussierspiegel eingesetzt, die wesentlich robuster gegen Verschmutzung sind als die transmissiven Linsen. Allerdings entfällt durch die Verwendung von Spiegeln die Trennung zwischen Prozessseite und Strahlführungsseite. Deshalb verschmutzen die Umlenkoptiken in der Strahlführung - z.B. durch Schweißrauch aus dem Prozess - schneller.

Der Einsatz robusterer Spiegeloptiken ist auch beim Laserschneiden wünschenswert, jedoch auf Grund der sehr hohen Druckdifferenzen zwischen Strahlführungsraum und Prozessseite schwerer zu realisieren.

Bekannt ist, die hermetische Trennung durch ein zusätzliches Planfenster auszuführen oder ein ZnSe-Fenster vor einem Fokussierspiegel anzubringen. Dieses Fenster übernimmt den Druckaufbau für das Schneidgas und trennt damit auch die Strahlführung und Prozessgasseite. In beiden Fällen wird ein transmissives Element eingesetzt, das gegenüber Verschmutzungen empfindlich ist. Ein ZnSe-Fenster hat die bekannten Schwächen durch den temperaturabhängigen Brechungsindex. Dies begrenzt seine Einsatzfähigkeit ebenso wie die der Linse.

Der Anmelder hat sich die Aufgabe gestellt, einen Laserbearbeitungskopf, insbesondere Laserschneidkopf, zu entwickeln, welcher eine möglichst einfache konstruktive Trennung der Strahlführung vom Laserbearbeitungsbereich aufweist und bei Laserleistungen bis über 10 kW verwendet werden kann.

Diese Aufgabe wird durch einen Laserbearbeitungskopf gemäß Anspruch 1. Die Blende wird als Schutz und Abdichtung der Strahlführung gegenüber Fremdstoffen, wie Schneidgas, Umgebungsatmosphäre und Schneidstaub, benutzt. Die Blende hat die Aufgabe, bei geringem Gasverlust den Überdruck in der Strahlführung zu ermöglichen, und somit den Strahlführungsraum aktiv vor Einströmung aus der Umbebung zu schützen. Die Erfindung ist bei Laserschneidköpfen und Laserschweißköpfen einsetzbar.

Wenn ein erster und zweiter Spiegel zur Umlenkung und Erzeugung eines Zwischenfokus des Laserstrahls vorgesehen sind, und die Blende im Zwischenfokus angeordnet ist, kann die Blendenöffnung klein gehalten werden.

Zur Erzeugung des Zwischenfokus kann der erste Spiegel ein Paraboloidspiegel und der zweite Spiegel ein Ellipsoidspiegel sein.

Gegebenenfalls auf die Blende fallende Laserleistung erwärmt diese. Daher ist eine direkte oder indirekte Blendenkühlung vorteilhaft.

Wenn an der Blende ein Drucksensor angeordnet ist, kann der austretende Volumenstrom überwacht werden.

Zur Vermeidung von Gasströmen aus dem Laserbearbeitungsbereich in die Strahlführung auf Grund eines entsprechenden Überdrucks im Bauraum zwischen Blende und Schneiddüse wird erfindungsgemäß eine Entlastungsöffnung zwischen einer Ringspaltdüse und der Blende vorgeschlagen. Es können keine Partikel aus dem Prozess (z.B. Einstechspritzer) in die Strahlführung gelangen. Im Fall von Sauerstoff als Schneidgas wird eine Aufkonzentration in der Stahlführungsatmosphäre somit verhindert.

Ein Ausführungsbeispiel der Erfindung ist in der Zeichnung schematisch dargestellt und wird nachfolgend mit Bezug zur Figur der Zeichnung näher erläutert. Die Figuren zeigt im Einzelnen:
- **Fig. 1**: eine Laserbearbeitungsmaschine in der Seitenansicht;
- **Fig. 2**: die Laserbearbeitungsmaschine in der Draufsicht;
- **Fig. 3**: einen Laserbearbeitungskopf in isometrischer Darstellung;
- **Fig. 4**: den Laserbearbeitungskopf im Längsschnitt;
- **Fig. 5**: eine Blende des Laserbearbeitungskopfs im Längsschnitt.

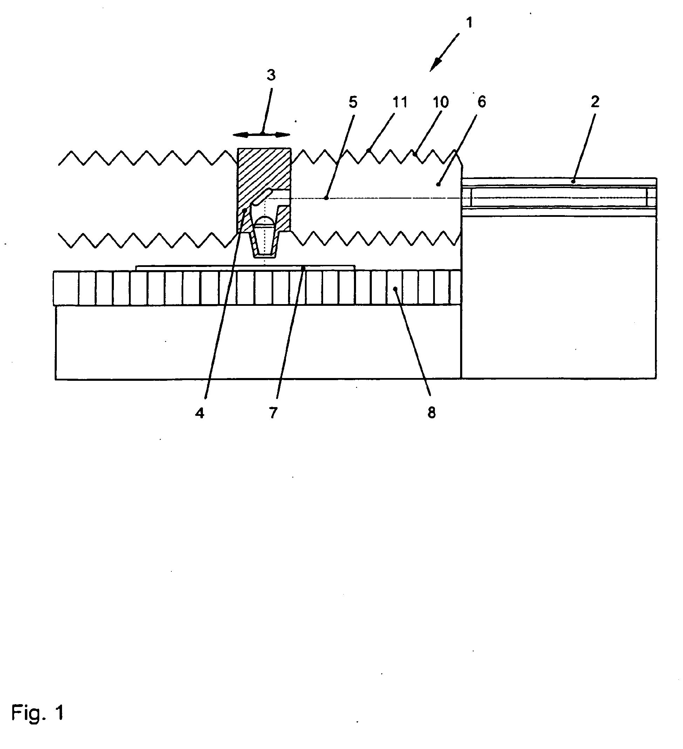

Aus der **Fig. 1** ist ersichtlich, dass eine Laserbearbeitungsmaschine **1** einen Lasergenerator **2** sowie einen relativ dazu in Richtung eines Doppelpfeils **3** bewegbaren Laserbearbeitungskopf **4** umfasst. Ein mittels des Lasergenerators 2 erzeugter Laserstrahl **5** wird ausgehend von dem Lasergenerator 2 durch einen mit einem reinen Gas gespülten Strahlführungsraum **6** zu dem Bearbeitungskopf 4 geleitet und an diesem auf ein zu bearbeitenden Werkstück **7** in Form eines Blechs gelenkt, das auf einer Werkstückauflage **8** der Laserbearbeitungsmaschine 1 abgelegt ist.

Der Strahlführungsraum 6 ist mit reinem Gas, z.B. Stickstoff, gefüllt. Der Strahlführungsraum 6 wird von einem Faltenbalg **10** oder einem sonstigen hermetischen Abschluss (auch ein Rohr, Teleskoprohr usw.) begrenzt. Der Faltenbalg 10 bildet die Gasraumwand und besteht aus einer Aneinanderreihung flexibler Falten **11**.

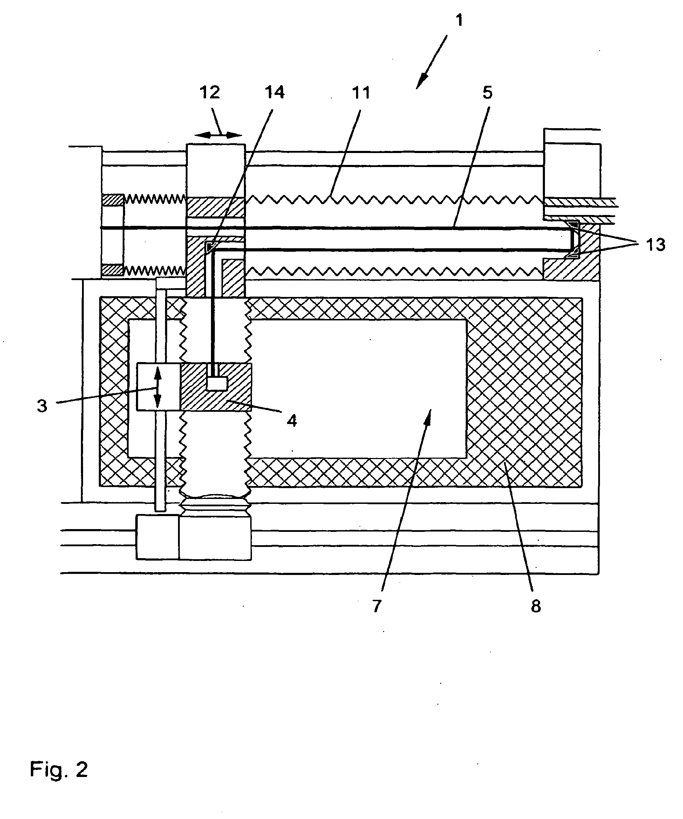

Gemäß **Fig. 2** ist der Laserbearbeitungskopf 4 zweiachsig, nämlich in Richtung des Doppelpfeils 3 sowie senkrecht dazu in Richtung eines Doppelpfeils **12** verfahrbar. Der Laserstrahl 5 wird ausgehend von dem Lasergenerator über eine erste Strahlumlenkungseinrichtung **13** sowie eine zweite Strahlumlenkungseinrichtung **14** zu dem Bearbeitungskopf 4 geleitet und dort zu dem Werkstück 7 hin umgelenkt.

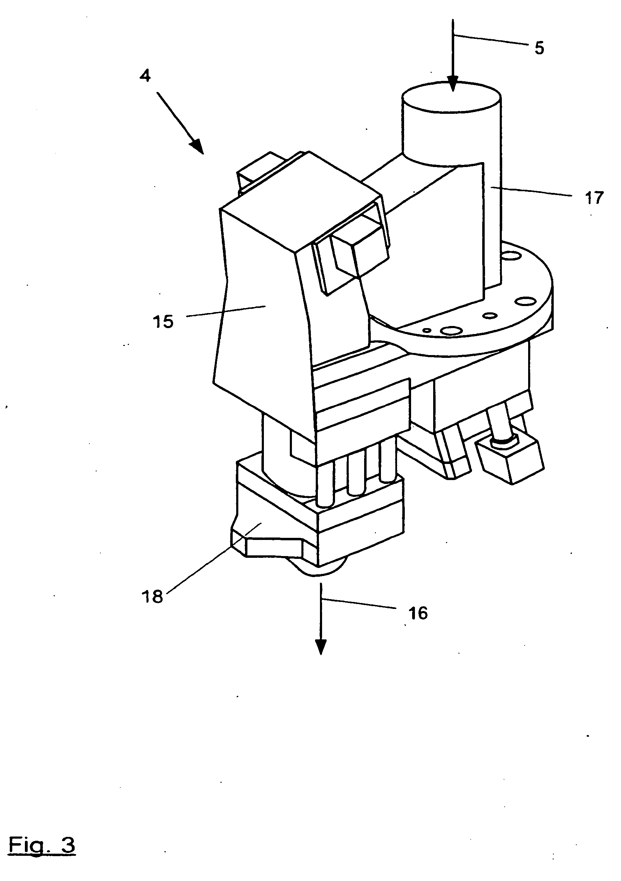

Ein Gehäuse **15** des Laserbearbeitungskopfs 4 ist in **Fig. 3** dargestellt. Das Gehäuse 15 kann an der Laserbearbeitungsmaschine 1 angekoppelt werden und weist auch die notwendigen Anschlüsse auf.

Der Laserstrahl 5 wird innerhalb des Gehäuses 15 umgelenkt und fokussiert, so dass ein fokussierter Laserstrahl **16** auf das Werkstück gelenkt wird. Mithilfe der Spiegelfokussierung und einer Blende im Gehäuse 15 wird ein der Strahlführung zugeordneter Gehäusebereich **17** von einem der Laserbearbeitung zugeordneten Gehäusebereich **18** getrennt. Die Strahlführung wird mit einem reinen Gas geringen Überdrucks gespült. Auch der Gehäusebereich 17 ist noch mit dem Gas gefüllt, während der Gehäusebereich 18 keine Gasspülung mehr aufweist.

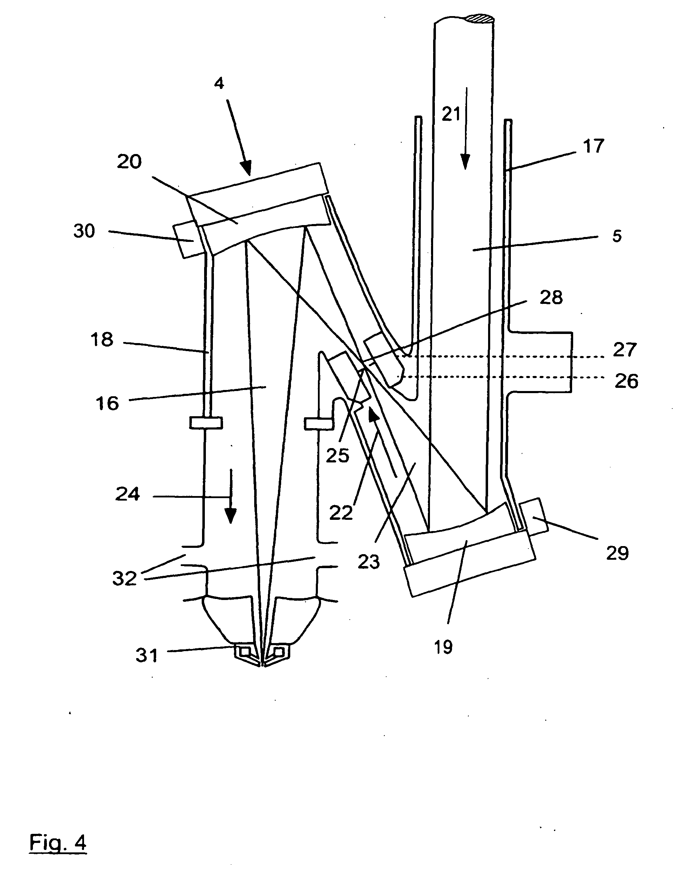

Um Prozessgasseite und Strahlführungsatmosphäre voneinander trennen zu können, wird der Laserstrahl 5 durch einen Zwischenfokus geleitet. Die dazu verwendeten Komponenten des Laserbearbeitungskopfs 4 sind durch einen fokussierenden Paraboloidspiegel **19** und einen Ellipsoidspiegel **20** ausgebildet. Der aus der Strahlführung in Richtung **21** einfallende Laserstrahl 5 wird durch den Spiegel 19 in Richtung **22** umgelenkt und fokussiert. Der Spiegel 20 bildet den aus dem Fokus divergent kommenden Laserstrahl **23** auf den Arbeitsfokus in Richtung **24** ab, so dass der zur Laserbearbeitung nutzbare fokussierte Laserstrahl 16 entsteht. Dieses Grundprinzip des Laserbearbeitungskopfs 4 ist **Fig. 4** zu entnehmen. Im Zwischenfokus **28** zwischen den beiden Optiken 19 und 20 ist eine Blende **25** angebracht, durch die der Laserstrahl 23 durchtritt. Der Durchmesser der Blende 25 ist so groß gewählt, dass der Laserstrahl 23 an ihrem Rand nicht streift und so klein, dass der Leckageverlust an Spülgas der Strahlführung gering ausfällt. Zur Überwachung der Leckage - beispielsweise durch Differenzdruckauswertung - kann an der Blende 25 ein Drucksensor (hier nicht sichtbar; jedoch an der Gehäuseposition **26** vorgesehen) angeordnet werden. Zur Kühlung der Blende 25 ist ein Kühlmittelanschluss (nicht sichtbar; jedoch an der Gehäuseposition **27** vorgesehen) vorgesehen.

Der Spiegel 20 bildet den aus dem Fokus 28 divergent kommenden Laserstrahl 23 auf den Arbeitsfokus ab, so dass der zur Laserbearbeitung nutzbare fokussierte Laserstrahl 16 entsteht. Beide Spiegel 19 und 20 sind mit Kühlmittelanschlüssen **29** bzw. **30** ausgerüstet, um die Spiegel 19 und 20 kühlen zu können. Innerhalb des Gehäusebereichs 17 existiert durch das Spülgas der Strahlführung ein geringer Überdruck (im Vergleich zum Gehäusebereich 18). Um mit dem Laserbearbeitungskopf 4 laserschneiden zu können, wird ein Druckaufbau des Schneidgases am Arbeitsfokus mit einer Ringspaltdüse **31** ausgeführt. Da Düsen dieser Bauart auch eine Rückströmung aufweisen können, ist durch ausreichend große Öffnungen **32** zwischen der Blende 25 und der Ringspaltdüse 31 für Abströmmöglichkeiten gesorgt. Die Öffnungen 32 sind so dimensioniert, dass im Gehäuse 15 kein statischer Druck entstehen kann, der größer als der in der Strahlführung ist. Sonst würde die Richtung des Leckagestroms in die Strahlführung umgekehrt.

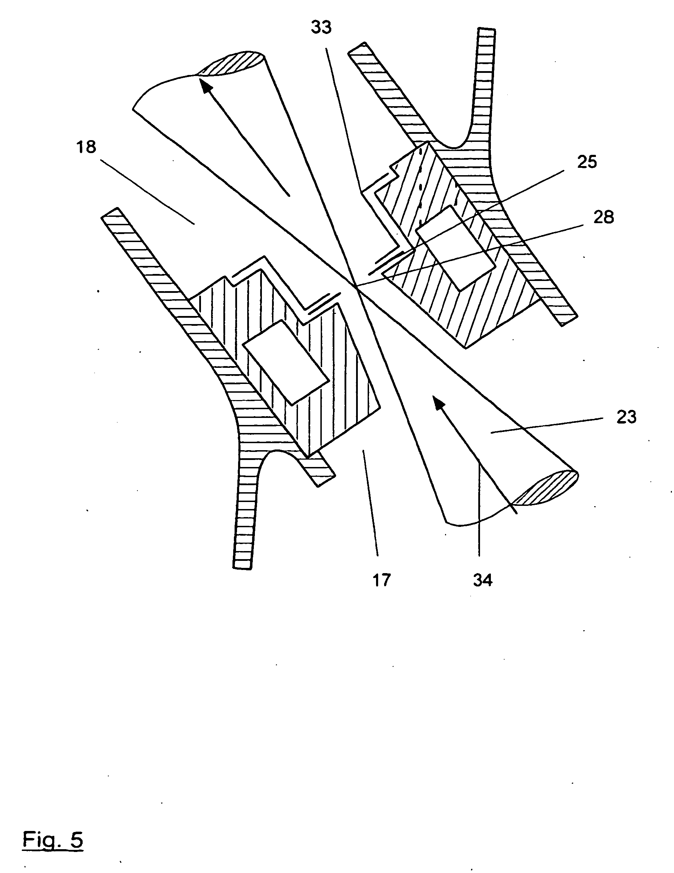

Die Umsetzung des erfindungsgemäßen Grundprinzips in den kompletten Laserbearbeitungskopf 4 zeigt **Fig. 5**. Der Laserstrahl wird durch den ersten Spiegel umgelenkt und fokussiert (Fokus 28). Innerhalb der rotationssymmetrisch bezüglich der Laserstrahldurchtrittsrichtung ausgeführten Blende 25 befindet sich ein eingesetzter Kühlkörper **33**, der die Wärme des Laserstrahls 23 aufnimmt und gekühlt wird. Bei einem Überdruck von beispielsweise 1,5 mbar in der Strahlführung beträgt der Volumenstrom **34** durch die Blende 25 bei einer Blendenöffnung von 2,5 mm 3,5 l/min.

### BEZUGSZEICHENLISTE

- 1: Laserbearbeitungsmaschine
- 2: Lasergenerator
- 3: Doppelpfeil
- 4: Laserbearbeitungskopf
- 5: Laserstrahl
- 6: Strahlführungsraum
- 7: Werkstück
- 8: Werkstückauflage
- 9:
- 10: Faltenbalg
- 11: Falten
- 12: Doppelpfeil
- 13: Strahlumlenkungseinrichtung
- 14: Strahlumlenkungseinrichtung
- 15: Gehäuse
- 16: Laserstrahl
- 17: Gehäusebereich
- 18: Gehäusebereich
- 19: Paraboloidspiegel
- 20: Ellipsoidspiegel
- 21: Richtung
- 22: Richtung
- 23: Laserstrahl
- 24: Richtung
- 25: Blende
- 26: Drucksensor (nicht sichtbar)
- 27: Kühlmittelanschluss (nicht sichtbar)
- 28: Fokus
- 29: Kühlmittelanschluss
- 30: Kühlmittelanschluss
- 31: Ringspaltdüse
- 32: Öffnung
- 33: Kühlkörper
- 34: Volumenstrom

## Patentansprüche

1. Laserbearbeitungskopf (4), insbesondere Laserschneidkopf, mit einem der Strahlführung einer Laserbearbeitungsmaschine (1) zugeordneten Gehäusebereich (17) und mit einem der Laserbearbeitung zugeordneten Gehäusebereich (18), wobei eine Blende (25) für den Laserstrahl (23) als Trenneinrichtung zwischen den Gehäusebereichen (17, 18) vorgesehen ist, **dadurch gekennzeichnet, daß** der der Laserbearbeitung zugeordnete Gehäusebereich (18) eine Ringspaltdüse (31) zum Druckaufbau eines Schneidgases am Arbeitsfokus aufweist, und wobei mindestens eine Öffnung (32) zwischen der Ringspaltdüse (31) und der Blende (25) zur Abströmung von zurückströmendem Schneidgas angeordnet ist.

2. Laserbearbeitungskopf nach Anspruch 1, **dadurch gekennzeichnet, dass** ein erster (19) und zweiter Spiegel (20) zur Umlenkung und Erzeugung eines Zwischenfokus (28) des Laserstrahls (23) vorgesehen sind und dass die Blende (25) im bzw. nahe am Zwischenfokus (28) angeordnet ist.

3. Laserbearbeitungskopf nach Anspruch 1, **dadurch gekennzeichnet, dass** der erste Spiegel ein Paraboloidspiegel (19) und der zweite Spiegel ein Ellipsoidspiegel (20) ist.

4. Laserbearbeitungskopf nach einem der vorhergehenden Ansprüche, **dadurch gekennzeichnet, dass** die Blende (25) kühlbar ist.

5. Laserbearbeitungskopf nach Anspruch 4, **dadurch gekennzeichnet, dass** ein Kühlkörper (33) in die Blende (25) eingesetzt ist.

6. Laserbearbeitungskopf nach einem der vorhergehenden Ansprüche, **dadurch gekennzeichnet, dass** an der Blende (25) ein Drucksensor angeordnet ist.

7. Laserbearbeitungskopf nach einem der vorhergehenden Ansprüche, **dadurch gekennzeichnet, dass** die Spiegel (19, 20) kühlbar sind.

## Claims

1. Laser processing head (4), in particular a laser cutting head, having a housing region (17) which is associated with the beam guide of a laser processing machine (1) and having a housing region (18) which is associated with the laser processing, with a screen (25) for the laser beam (23) being provided as a partition device between the housing regions (17, 18), **characterized in that** the housing region (18) which is associated with the laser processing has an annular nozzle (31) for pressure build-up of a cutting gas at the operating focal point, and at least one opening (32) being arranged between the annular nozzle (31) and the screen (25) in order to discharge cutting gas which is flowing back.

2. Laser processing head according to claim 1, **characterised in that** there are provided a first mirror (19) and a second mirror (20) for redirecting and producing an intermediate focal point (28) of the laser beam (23) and **in that** the screen (25) is arranged at or close to the intermediate focal point (28).

3. Laser processing head according to claim 1, **characterised in that** the first mirror is a paraboloid mirror (19) and the second mirror is an ellipsoid mirror (20).

4. Laser processing head according to any one of the preceding claims, **characterised in that** the screen (25) can be cooled.

5. Laser processing head according to claim 4, **characterised in that** a cooling member (33) is inserted in the screen (25).

6. Laser processing head according to any one of the preceding claims, **characterised in that** a pressure sensor is arranged on the screen (25).

7. Laser processing head according to any one of the preceding claims, **characterised in that** the mirrors (19, 20) can be cooled.

## Revendications

1. Tête d'usinage au laser (4), en particulier tête de découpage au laser, avec une partie de boîtier (17) associée au guidage de faisceau d'une machine d'usinage au laser (1) et avec une partie de boîtier (18) associée à l'usinage au laser, un diaphragme (25) pour le faisceau laser (23) étant prévu comme dispositif de séparation entre les parties de boîtier (17, 18), **caractérisée en ce que** la partie de boîtier (18) associée à l'usinage au laser présente une buse à fente annulaire (31) pour élever la pression d'un gaz de coupe au foyer de travail, et au moins une ouverture (32) étant disposée entre la buse à fente annulaire (31) et le diaphragme (25) pour la sortie du gaz de coupe refluant.

2. Tête d'usinage au laser selon la revendication 1, **caractérisée en ce qu'**un premier (19) et un deuxième miroir (20) sont prévus pour dévier le faisceau laser (23) et produire un foyer intermédiaire (28) et que le diaphragme (25) est disposé dans ou à proximité du foyer intermédiaire (28).

3. Tête d'usinage au laser selon la revendication 1, **caractérisée en ce que** le premier miroir est un miroir paraboloïde (19) et le deuxième miroir un miroir ellipsoïdal (20).

4. Tête d'usinage au laser selon l'une des revendications précédentes, **caractérisée en ce que** le diaphragme (25) peut être refroidi.

5. Tête d'usinage au laser selon la revendication 4, **caractérisée en ce qu'**un dissipateur thermique (33) est intégré dans le diaphragme (25).

6. Tête d'usinage au laser selon l'une des revendications précédentes, **caractérisée en ce qu'**un capteur de pression est disposé sur le diaphragme (25).

7. Tête d'usinage au laser selon l'une des revendications précédentes, **caractérisée en ce que** les miroirs (19, 20) peuvent être refroidis.
